# EUROPEAN PATENT APPLICATION

(11) **EP 3 260 198 A1**
(43) Date of publication of application: **27.12.2017**
(21) Application number: 16752599.7
(22) Date of filing: 19.02.2016
(51) Int. Cl.: B01J 23/63, B01J 37/04, B01J 37/08, C01C 1/04

(54) **AMMONIA SYNTHESIS CATALYST AND METHOD FOR PRODUCING SAME**

(30) Priority: 20.02.2015 JP 2015032192; 08.02.2016 JP 2016021712
(71) Applicant: Japan Science and Technology Agency, Kawaguchi-shi, Saitama 332-0012 (JP)
(72) Inventor: NAGAOKA, Katsutoshi, Oita-shi Oita 870-1192 (JP); IMAMURA, Kazuya, Oita-shi Oita 870-1192 (JP); SATO, Katsutoshi, Oita-shi Oita 870-1192 (JP)
(74) Representative: Hart-Davis, Jason
(86) International application number: PCT/JP2016/054941
(87) International publication number: WO 2016/133213

(57) **Abstract**

The present invention provides a rare earth oxide-supported noble metal catalyst which has a high catalytic activity, is greatly improved in the ammonia production activity per weight of the catalyst and per amount of the supported metal, and enables the synthesis of ammonia under mild conditions. The catalyst according to the present invention is characterized in that ruthenium is supported in a layered form on a praseodymium oxide carrier. The catalyst according to the present invention can be produced by burning a praseodymium oxide precursor at a lower temperature, then at a medium temperature and then at a higher temperature to produce praseodymium oxide, then agitating the resultant praseodymium oxide together with a ruthenium supply source in a solvent, then removing the solvent from the mixture, and then burning the resultant product.

## Description

### TECHNICAL FIELD

The invention relates to a catalyst for synthesizing ammonia, in particular, to a noble metal catalyst supported on a rare-earth oxide exhibiting very high capability of ammonia synthesis under mild conditions.

### BACKGROUND ART

Ammonia is an important chemical feedstock used for fertilizer, etc., and has drawn attention as an energy carrier in recent years. In most recent years, methods or catalysts for synthesis of ammonia using renewable energy have been drawn attention.

The Haber-Bosch process, which is already industrialized and uses an iron catalyst, is a process carried out at high temperature and high pressure. It is difficult to carry out the process using renewable energy. Therefore, it is necessary to develop a catalyst for ammonia synthesis exhibiting a high activity under conditions which are milder than those used in the Haber-Bosch process, i.e., conditions of lower temperature and lower pressure.

It has been reported that catalysts in which ruthenium is supported on various carriers exhibit high capability of formation of ammonia even low temperature and low pressure (see, for example, Non-Patent Documents 1 and 2).

### PRIOR ART DOCUMENTS

### NON-PATENT DOCUMENTS

Non-Patent Document 1: Aika et al., J. Catal., 136, 126(1992)
Non-Patent Document 2: Hosono et al., Nature Chemistry, 4, 934(2012)

### SUMMARY OF THE INVENTION

### PROBLEMS TO BE SOLVED BY THE INVENTION

However, the activity of a catalyst for ammonia formation per weight of catalyst or per amount of supported metal, which is significant for practical use of the catalyst, is still not sufficient and therefore high activation of a catalyst at conditions of low temperature and low pressure is required.

In order to satisfy such a requirement, the invention provides a novel noble metal catalyst supported on a rare-earth oxide for synthesis of ammonia at mild conditions.

### MEANS FOR SOLVING THE PROBLEMS

The noble metal catalyst supported on a rare-earth oxide of the invention, which synthesizes ammonia at mild conditions, is characterized in that ruthenium is supported on a praseodymium carrier so as to be layered thereon.

The ammonia synthesis catalyst of the invention provided with the above unique structure unknown in the prior art can be obtained by forming praseodymium oxide by firing praseodymium oxide precursor (for example, praseodymium hydroxide) at low, middle and high temperatures in this order, stirring the formed praseodymium oxide together with a ruthenium source in a solvent, removing the solvent from the mixture, and then firing the rest.

Hereinafter, the catalyst in which ruthenium is supported on a praseodymium oxide carrier is designated as "Ru/PrOₓ" in some cases.

### EFFECTS OF THE INVENTION

The catalyst of the invention develops a high catalyst activity since ruthenium is highly dispersed and uniformly supported so as to be layered on the surface of a praseodymium oxide carrier, and has a largely improved activity of ammonia synthesis per weight of catalyst or per amount of supported metal in comparison to prior catalysts using ruthenium.

### BRIEF DESCRIPTION OF THE DRAWINGS

Fig. 1 shows a high-angle annular dark field (HAADF) image obtained by observing a catalyst of the invention by a scanning transmission electron microscope (STEM).
Fig. 2 shows elemental mappings obtained by observing the catalyst of Fig. 1 by an STEM equipped with an energy dispersive X-ray spectrometer (EDX).
Fig. 3 is a result of high-resolution observation of the location at which the presence of Ru is observed in the EDX observation used for Fig. 2.
Fig. 4 is an HAADF image showing a layer of deposited Ru in a catalyst according to the invention.
Fig. 5 is a result of high-resolution observation of a location at which Ru is observed in an STEM-EDX mapping of a typical catalyst of prior art in which Ru is supported on a PR₆O₁₁ carrier.
Fig. 6 shows graphs of effects of amounts of Ru in the catalyst according to the invention on activity of NH₃ synthesis.
Fig. 7 shows effects of pressures during reactions on activity of ammonia synthesis of Ru/PrOₓ.

### EMBODIMENTS FOR CARRYING OUT THE INVENTION

The noble metal catalyst supported on a rear-earth oxide for the synthesis of ammonia at mild conditions of the invention is characterized in that ruthenium Ru is supported so as to be layered on a praseodymium oxide carrier. The amount of Ru supported is preferred to be 1 to 10% by weight of the total amount of the Ru-supported catalyst. If it is below 1% by weight, a sufficient NH₃ synthesis activity cannot be expected. If it exceeds 10% by weight, the effect of the catalyst is saturated, and is not economical. More preferably, the amount of Ru supported is 3 to 5% by weight.

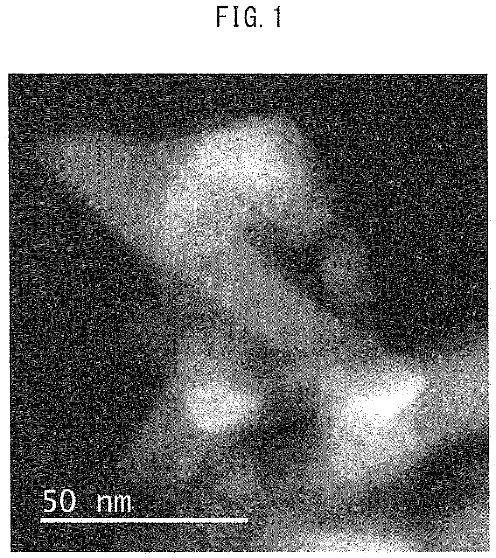

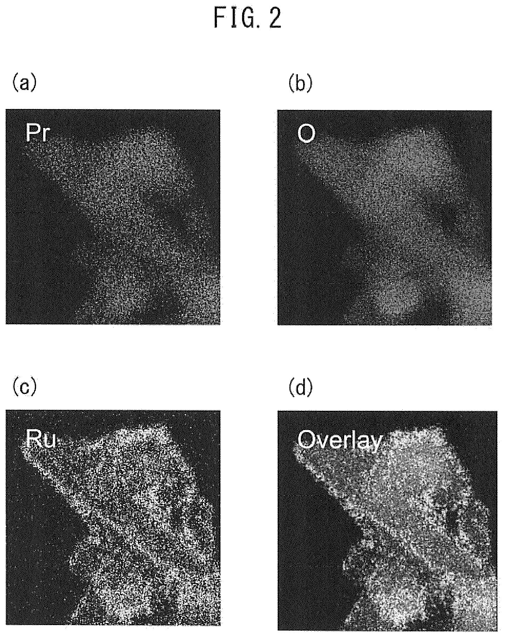

Fig. 1 shows an HAADF image obtained by observing the catalyst of the invention by an STEM. Fig. 2 shows elemental mappings of the catalyst of Fig. 1. In the mappings, the locations where elements are present are brightly indicated. The mappings of Pr, O and Ru elements are shown in (a), (b) and (c) of Fig. 1, respectively, and (d) shows a result obtained by overlaying them. Mapping (c) and (d) reveal that Ru is distributed nearly the entire of the catalyst. In addition, it is confirmed, from the fact that the edges of the catalyst are particularly bright, that Ru is uniformly supported so as to be layered mainly on the surface of the carrier.

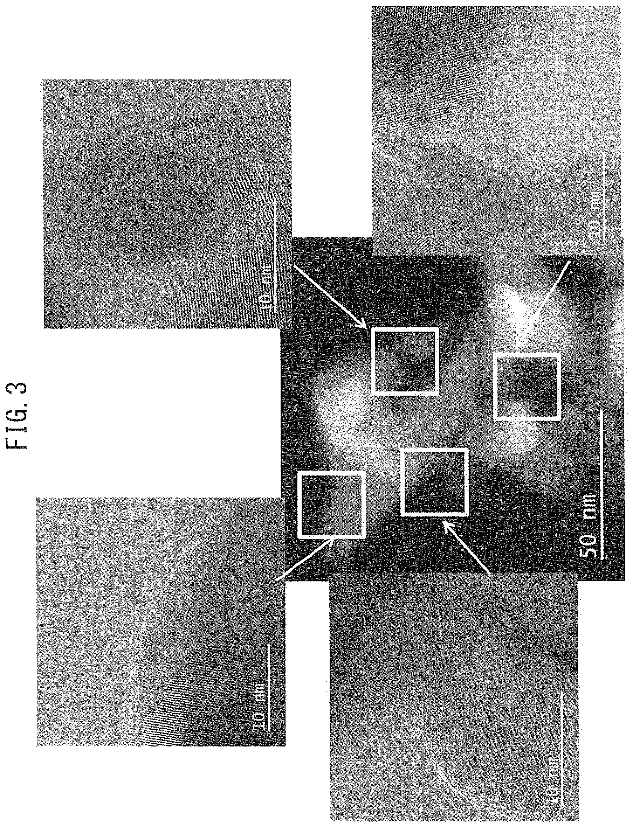

Fig. 3 shows a result of high-resolution observation of the location at which the presence of Ru is observed in the EDX observation used for Fig. 2. It cannot be seen that Ru is supported as particles.

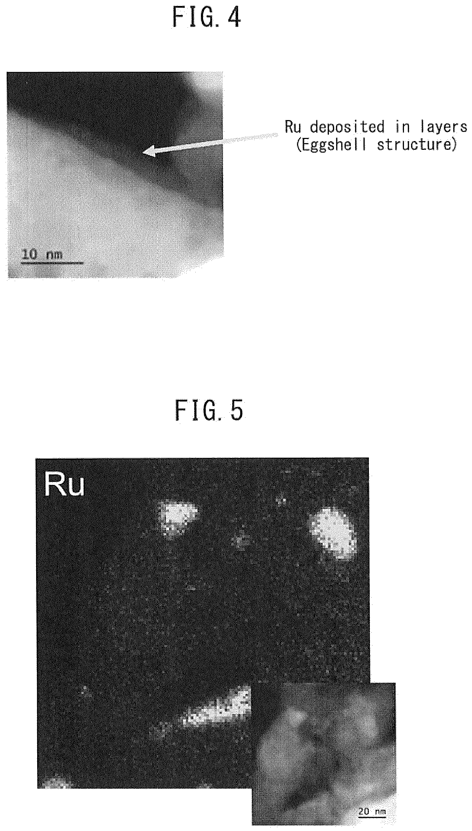

Fig. 4 shows an HAADF image of another Ru/PrOₓ catalyst of the invention. It has been confirmed that Ru is deposited so as to be layered on the surface of PrOₓ carrier, forming an eggshell structure. Although a layer of deposited Ru that is at least 0.1 nm provides a high yield of ammonia, it is preferred that it is 0.2 to 0.3 nm in order to obtain a stabler and higher yield of ammonia. Even if the Ru layer is excessively thick, the amount of Ru present on the top surface of the catalyst and in contact with raw material gases is saturated, and an effect of improving ammonia yield reaches a limit. Therefore, the upper limit of the thickness of Ru layer may be discretionally determined so as to be a thickness at which the effect reaches a limit.

Fig. 5 shows a result of high-resolution observation of a location at which Ru is observed in a catalyst according to prior art (a commercial product available from Kanto Kagaku) in which ruthenium Ru is supported on a praseodymium oxide PR₆O₁₁ carrier. It cannot be seen that Ru is uniformly distributed.

It is assumed that the difference in Ru-supporting state between the ruthenium catalyst supported on a praseodymium oxide of the invention and the above-mentioned ruthenium catalyst supported on a praseodymium oxide according to prior art is due to the difference in characteristics between praseodymium oxide carriers used in the respective catalyst, in particular, the difference in surface structure of praseodymium carrier, including differences in specific surface area, defects and functional groups, resulted from the difference in firing process, i.e., whether firing carried out stepwise or carried out quickly from a low temperature to a high temperature.

In addition to the above ruthenium catalyst supported on a praseodymium oxide of prior art, catalysts in which Ru is supported on magnesium oxide (MgO) or cerium oxide (CeO₂) carrier were similarly observed. As a result, it turned out that Ru is supported as crystallized fine particles, or there are locations on the carrier where Ru is enormously agglomerated and Ru is supported as fine particles. Thus, it was proved that also in the catalysts having Ru supported on MgO or CeO₂ carrier, Ru is not supported so as to be layered.

The Ru/PrOₓ catalyst of the invention can be produced by a method in which a praseodymium oxide precursor is converted to praseodymium oxide having a large specific surface area by firing the precursor at low, middle and high temperatures in this order, the converted praseodymium oxide is stirred together with a ruthenium source in a solvent, the solvent is removed from the mixture, and then the rest is fired.

The precursor of praseodymium oxide used in the invention can be prepared by various methods, such as a precipitation method and a polymerized complex method. For example, a neutralization precipitation method can be used, in which a precipitant, such as ammonia, sodium hydroxide or cesium hydroxide, and an aqueous solution of praseodymium salt, such as praseodymium nitrate, praseodymium chloride or praseodymium carbonate, are reacted to provide an hydroxide.

Preferably, praseodymium hydroxide, which is a precursor of praseodymium oxide carrier, is first prepared by mixing aqueous ammonia and an aqueous solution of praseodymium nitrate. The mixing molar ratio of ammonia and praseodymium nitrate is preferably of the order of 5:1 to 2:1, more preferably of the order of 3:1. The concentrations of ammonia and praseodymium nitrate in aqueous ammonia and aqueous praseodymium nitrate solution, respectively, are preferably of the order of 4 to 32 moles/liter and 0.1 to 1 mole/liter, respectively, and more preferably of the order of 8 to 16 moles/liter and 0.25 to 0.5 mole/liter, respectively. The mixing can be carried out at normal temperature.

Subsequently, the resultant praseodymium oxide precursor is converted to praseodymium oxide having a large specific surface area by firing of three steps of different temperatures. The composition of praseodymium oxide to be obtained by firing is not particularly limited. Oxides of various O/Pr ratios can be used for the catalyst carrier in the invention. A preferred O/Pr ratio is 1.5 to 1.9.

The firing is carried out at three steps in order to prevent sintering of praseodymium oxide, the sintering would otherwise occur by rapid heating and decomposition of the praseodymium oxide precursor in the course of the praseodymium oxide precursor changing into praseodymium oxide. In addition, it is assumed that a metastable and excellent structure is established on the surface of praseodymium oxide by virtue of such a multi-step firing process as mentioned above in which heating is carried out stepwise from a low temperature to a high temperature, and the oxide as a carrier is differentiated from a carrier prepared by a prior process and having a surface including defects, functional groups, etc. The first firing at a low temperature is preferred to be carried out at a temperature of the order of 200 to 400°C for about 1 to 10 hours. The second firing at a middle temperature is preferred to be carried out at a temperature of the order of 400 to 600°C for about 1 to 10 hours. The last firing at a high temperature is preferred to be carried out at a temperature of the order of 600 to 900°C for about 1 to 10 hours. These firings can be carried out under any concentration of oxygen, for example, in air or in a mixed gas of an inert gas and oxygen.

The praseodymium oxide thus obtained is then mixed with a ruthenium source in an appropriate organic solvent, after which the solvent is removed and the rest is fired, to thereby provide a ruthenium catalyst supported on praseodymium oxide of the invention in which ruthenium is deposited so as to be layered on praseodymium oxide carrier. As the ruthenium source, various compounds containing Ru may be used. Preferably, an organometal compound, such as triruthenium dodecacarbonyl RU₃(CO)₁₂ or ruthenium acetylacetonato, may be used. It is also possible to use other ruthenium sources, such as ruthenium chloride, capable of allowing ruthenium to be supported on praseodymium oxide. When an organometal compound, such as ruthenium carbonyl, is used as a ruthenium source, it is advantageous to use, as a solvent, an organic solvent. Examples of organic solvents include tetrahydrofuran (THF), methanol, ethanol, hexane and toluene. These solvents may be used without special pretreatment, if they are common commercial products. However, the solvent is preferably used after purification, dehydration, etc. In general, the solid concentrations of praseodymium oxide and a ruthenium source in a solvent are preferably to be of the order of 1 to 30 grams/liter and 0.1 to 3 grams/liter, respectively, more preferably of the order of 10 to 30 grams/liter and 0.1 to 0.3 gram/liter, respectively. A mixture can be stirred at normal temperature, preferably for 1 to 24 hours, more preferably for 6 to 12 hours. Removal of solvent can be carried out by heating using various methods. However, the removal is preferably carried out in an atmosphere of reduced pressure and low temperature using, for example, an evaporator. Firing is carried out in an inert atmosphere, for example, an atmosphere of helium, argon or nitrogen. Firing can also be carried out in an atmosphere containing hydrogen. Firing is carried out at a temperature of the order of 200 to 450°C for about 1 to 12 hours. The firing temperature is preferably of the order of 300 to 400°C, and more preferable firing time is about 3 to 6 hours.

### EXAMPLES

The invention will now be further described in reference to the examples, which do not limit the invention.

A mixed solution obtained by adding 0.25 liter of 8% aqueous solution of praseodymium nitrate to 0.25 liter of 28% aqueous ammonia was stirred at normal temperature for 11 hours. Resultant praseodymium hydroxide precipitate was separated, washed in water at normal temperature, filtered, and dried at 70°C overnight.

The dried praseodymium hydroxide was converted to praseodymium oxide by firing the hydroxide stepwise at 300°C for 3 hours, at 550°C for 3 hours and at 700°C for 5 hours in this order. Subsequently, 4 grams of praseodymium oxide having been cooled to normal temperature was added to 0.2 liter of tetrahydrofuran solution in which 0.46 gram of ruthenium carbonyl was dissolved, and the resultant mixture was stirred overnight. Tetrahydrofuran was then removed from the solution by evaporation, and the rest was fired at 350°C in an atmosphere through which argon gas was passed, to thereby yield a catalyst in which ruthenium was supported so as to be layered on a praseodymium oxide carrier.

The activity of ammonia synthesis of the resultant catalyst was examined as follows. Ammonia was synthesized by passing 3:1 molar ratio of hydrogen gas and nitrogen gas through a pipe in which 0.2 gram of the catalyst having been pretreated in an H₂ reducing atmosphere for 1 hour was filled, in a space velocity of 18000 ml/h.g-catalyst at 390°C and 0.9 MPa. Effluent gas (which contained formed ammonia and residual hydrogen and nitrogen) was supplied into an aqueous solution of diluted sulfuric acid to collect ammonia by the solution, and the activity was evaluated by the change in electrical conductivity of the aqueous solution.

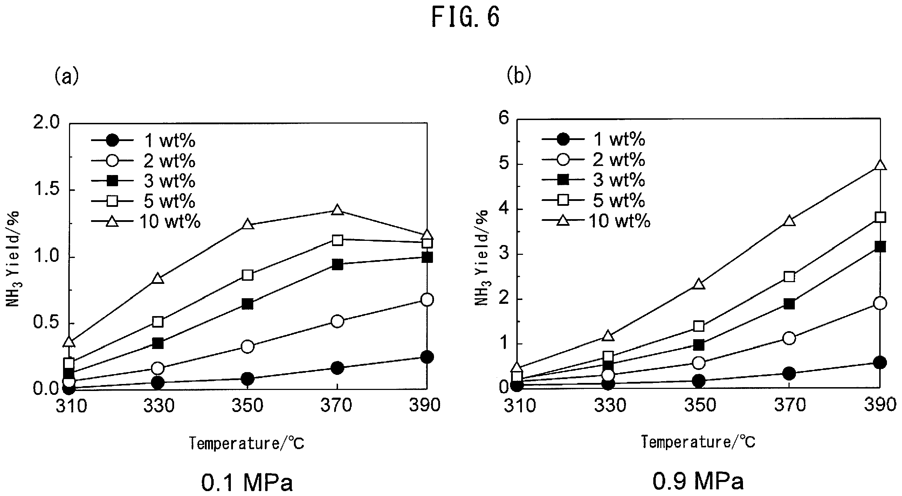

Fig. 6 shows results of examination of the effects of amount of supported metal on activity of NH₃ synthesis of the catalyst at 0.1 MPa and 0.9 MPa.

Table 1 shows data obtained by comparing the activities of NH₃ synthesis of the ruthenium catalysts supported on praseodymium oxide according to the invention with those of catalysts in which Ru was supported on an MgO or CeO₂ carrier and the above-mentioned Ru/Pr₆O₁₁ catalyst of prior art (commercial product). In the table, TOF represents the number of reaction of ammonia synthesis per one active site and one second, calculated based on the amount of hydrogen adsorbed to the Ru catalyst. The thicknesses of ruthenium layers in the table represent the thicknesses measured at the locations where the ruthenium layers had the smallest thicknesses.
[Table 1]

**Table 1**

| Catalysts | | Ru layer Thickness | Ammonia Yields | Synthesis Rates | | TOF | Temp. | Press. |
|---|---|---|---|---|---|---|---|---|
| | | nm | % | Lg⁻¹h⁻¹ | Lgₘₑₜₐₗ⁻¹h⁻¹ | s⁻¹ | °C | MPa |
| Invention | 2wt% Ru/PrOₓ | 0.2 | 2.00 | 0.18 | 3.58 | n.d. | 390 | 0.9 |
| | 5wt% Ru/PrOₓ | 0.3 | 3.8 | 0.34 | 6.8 | 0.03 | 390 | 0.9 |
| | 7wt% Ru/PrOₓ | 0.3 | 4.20 | 0.38 | 7.52 | n.d. | 390 | 0.9 |
| 5wt% Ru/MgO | | 0 | 0.36 | 0.029 | 0.58 | 0.0016 | 390 | 0.9 |
| 5wt% Ru/CeO₂ | | 0 | 1.8 | 0.17 | 3.4 | 0.0087 | 390 | 0.9 |
| 5wt% Ru/Pr₆O₃ (Commercial Product) | | 0 | 0.77 | 0.06 | 1.2 | n.d. | 390 | 0.9 |

| | | | | | | | | |
|---|---|---|---|---|---|---|---|---|
| n.d.: Not determined | | | | | | | | |

Table 2 shows data obtained by comparing the activities of NH₃ synthesis of the catalysts according to Non-Patent Documents 1 and 2, which are reported to exhibit high activities of ammonia formation even at low temperature and low pressure, with the activities of NH₃ synthesis of the Example of 5wt% Ru/PrOₓ catalyst of the invention as shown in Table 1.
[Table 2]

**Table 2**

| Catalysts | Yields | Synthesis Rates | | TOF | Temp. | Press. |
|---|---|---|---|---|---|---|
| | % | Lg⁻¹h⁻¹ | Lgₘₑₜₐₗ⁻¹h⁻¹ | s⁻¹ | °C | MPa |
| 6wt% Ru-Cs/MgO ¹⁾ | 3.0 | 0.27 | 4.5 | 0.03 | 400 | 1.0 |
| 4wt% Ru/C12A7:e^{- 2)} | 1.5 | 0.14 | 3.5 | 0.22 | 400 | 1.0 |
| 5wt% Ru/PrOₓ (Invention) | 4.7 | 0.43 | 8.6 | 0.04 | 400 | 1.0 |

| | | | | | | |
|---|---|---|---|---|---|---|
| 1) Aika et al, J. Catal., 136, 126(1992) 2) Hosono et al., Nature Chemistry, 4, 934(2012) | | | | | | |

As is evident from these data, it has been found that the ruthenium catalysts supported on praseodymium oxide of the invention have higher yields of ammonia, i.e., higher catalyst activities, compared to the other catalysts. It has also been found that as is evident from comparison of synthesis rates, the activities of ammonia formation of the catalysts of the invention per catalyst weight and per amount of supported metal are largely improved compared to the other catalysts.

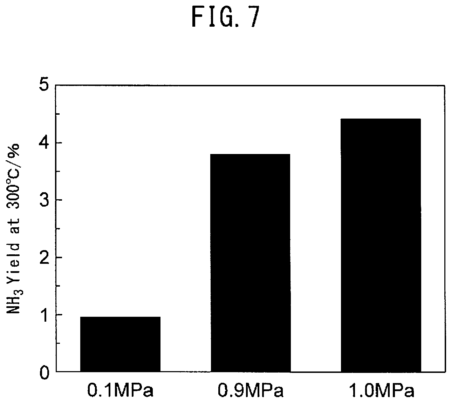

Fig. 7 shows results of examination of the effects of pressures during reaction on the activity of ammonia synthesis of the Ru/PrOₓ catalyst of the invention prepared as described above.

More the pressure was increased, larger the ammonia yield. From the fact that the yield was improved when the pressure was increased from 0.9 MPa to 1.0 MPa, a larger yield could be expected under practical conditions of higher pressures.

Table 3 shows results of examination of the effects of molar ratios of passing nitrogen and hydrogen gases on the activity of the 5wt% Ru/PrOₓ catalyst of the invention prepared as described above.
[Table 3]

**Table 3**

| N_{2/}H₂ | Yields | Synthesis Rates | | Temp. | Press. |
|---|---|---|---|---|---|
| | % | Lg⁻¹h⁻¹ | Lgₘₑₜₐₗ⁻¹h⁻¹ | °C | MPa |
| 1/3 | 3.79 | 0.340 | 6.80 | 390 | 0.9 |
| 1/2 | 5.02 | 0.401 | 8.02 | 390 | 0.9 |
| 1/1 | 6.81 | 0.408 | 8.15 | 390 | 0.9 |

Table 4 shows results of examination of the effects of space velocities on the activity of ammonia synthesis of the 5wt% Ru/PrOₓ catalyst of the invention prepared as described above.
[Table 4]

**Table 4**

| Space Velocities | Synthesis Rates | | Temp. | Press. |
|---|---|---|---|---|
| Lg⁻¹h⁻¹ | Lg⁻¹h⁻¹ | Lgₘₑₜₐₗ⁻¹h⁻¹ | °C | MPa |
| 18 | 0.43 | 8.6 | 400 | 1.0 |
| 72 | 0.92 | 18 | 400 | 1.0 |
| 288 | 1.4 | 29 | 400 | 1.0 |

Table 5 shows the activities of ammonia synthesis of the 5wt% Ru/PrOₓ catalyst of the invention prepared as described above when pressure was increased from 1.0 MPa to 3.0 MPa.
[Table 5]

**Table 5**

| Press. | Temp. | Synthesis Rates | | Space Velocities |
|---|---|---|---|---|
| MPa | °C | Lg⁻¹h⁻¹ | Lgₘₑₜₐₗ⁻¹h⁻¹ | Lg⁻¹h⁻¹ |
| 1.0 | 450 | 1.3 | 26 | 72 |
| 3.0 | 450 | 2.6 | 53 | 72 |

As is understood from these data, the productivity of the Ru/PrOₓ catalyst of the invention could be further improved by changing reaction conditions.

## Claims

1. An ammonia synthesis catalyst, **characterized in that** ruthenium is supported so as to be layered on a praseodymium oxide carrier.

2. The ammonia synthesis catalyst according to claim 1, **characterized in that** the amount of Ru supported is 1 to 10% by weight of the total amount of the Ru-supported catalyst.

3. The ammonia synthesis catalyst according to claim 1 or 2, **characterized in that** the Ru layer on the carrier has a thickness of larger than or equal to 0.1 nm.

4. A method for producing an ammonia synthesis catalyst, **characterized in that** a praseodymium oxide precursor is converted to praseodymium oxide by firing the precursor at low, middle and high temperatures in this order, the converted praseodymium oxide is stirred together with a ruthenium source in a solvent, the solvent is removed from the mixture, and then the rest is fired, to thereby make ruthenium be supported so as to be layered on the praseodymium oxide carrier.

5. The method for producing an ammonia synthesis catalyst according to claim 4, **characterized in that** the praseodymium oxide precursor is fired at 200 to 400°C for 1 to 10 hours, 400 to 600°C for 1 to 10 hours and 600 to 900°C for 1 to 10 hours in this order.

6. The method for producing an ammonia synthesis catalyst according to claim 4 or 5, **characterized in that** an organometal compound is used as the ruthenium source.

7. The method for producing an ammonia synthesis catalyst according to claim 6, **characterized in that** an organic solvent is used as the solvent.

8. The method for producing an ammonia synthesis catalyst according to claim 4 or 5, **characterized in that** triruthenium dodecacarbonyl is used as the ruthenium source, and tetrahydrofuran is used as the solvent.
